# EUROPÄISCHE PATENTSCHRIFT

(11) **EP 1 938 065 B1**
(45) Veröffentlichungstag und Bekanntmachung des Hinweises auf die Patenterteilung: **06.12.2017**
(21) Anmeldenummer: 06806447.6
(22) Anmeldetag: 20.10.2006
(51) Int. Cl.: G01K 3/04

(54) **AKTIVIERUNGSVORRICHTUNG FÜR AKTIVIERBARE INDIKATOREN ZUR WARENKENNZEICHNUNG**
ACTIVATION DEVICE FOR ACTIVATABLE INDICATORS USED IN PRODUCT LABELLING
DISPOSITIF D'ACTIVATION POUR INDICATEURS ACTIVABLES DE MARQUAGE DE MARCHANDISES

(30) Priorität: 21.10.2005 DE 102005051470
(43) Veröffentlichungstag der Anmeldung: 02.07.2008
(73) Patentinhaber: Bizerba SE & Co. KG, 72336 Balingen (DE)
(72) Erfinder: UBER, Markus, 72793 Pfullingen (DE)
(74) Vertreter: Manitz Finsterwald Patentanwälte PartmbB
(86) Internationale Anmeldenummer: PCT/EP2006/010164
(87) Internationale Veröffentlichungsnummer: WO 2007/045506

(56) Entgegenhaltungen:
- WO-A-2005/026383
- WO-A-2005/050192
- US-A- 4 785 295
- US-A- 4 892 677

## Beschreibung

Die Erfindung betrifft eine Aktivierungsvorrichtung für durch UV-Licht aktivierbare temperatursensitive und/oder zeitsensitive Indikatoren zur Warenkennzeichnung, umfassend eine UV-Lichtquelleneinrichtung.
Die Erfindung betrifft ferner eine Vorrichtung zur Bereitstellung von aktivierten temperatursensitiven und/oder zeitsensitiven Indikatoren zur Warenkennzeichnung.
Weiterhin betrifft die Erfindung ein Verfahren zur Aktivierung eines durch UV-Licht aktivierbaren temperatursensitiven und/oder zeitsensitiven Indikators zur Warenkennzeichnung.
Aus der DE 198 03 208 C2 ist ein Substrat zum Verpacken von oder zum Anbringen an alterungs- und temperaturempfindlichen Produkten mit einem im Bereich des Substrats angeordneten Zeit-Temperatur-Indikator bekannt, wobei der Zeit-Temperatur-Indikator ein Zeit-Temperatur-Integrator ist, dessen Startzeit definiert durch Lichteinstrahlung beliebig eingestellt werden kann, wobei der Indikator eine Matrix und mindestens einen darin eingebetteten reversiblen wiederaufladbaren kristallinen Indikator enthält, der fotochrome Eigenschaften auf der Basis von Transferreaktionen aufweist.
Nach der Aktivierung des Zeit-Temperatur-Indikators über Licht und insbesondere UV-Licht ändert sich die Farbe des Indikators in Abhängigkeit von der Zeit und der Temperatur. Dadurch läßt sich eine Warenkennzeichnung bereitstellen, wobei die Farbe des Indikators mit der Frische und der Qualität der Ware korrespondiert.

US 4,892,677 beschreibt einen temperatursensitiven Indikator für verderbliche Ware, der nach Aktivierung mittels UV-Licht eine bestimmte Farbe annimmt. Wird die verderbliche Ware und damit der an der Ware befindliche Indikator unerwünschten Temperaturen ausgesetzt, ändert sich dessen Farbe.

Auch die WO 2005/026383 A1 beschreibt einen mittels UV-Licht aktivierbaren temperatursensitiven Indikator zur Warenkennzeichnung.

WO2005/050192 offenbart eine Überprüfungsvorrichtung zur Bestimmung des Zustands (Alter, Temperaturbelastung) eines Zeit-Temperatur-Indikators mit einer z.B. UV-Lichtquelle und einem Fotosensor, wobei die Lichtquelle und der Fotosensor mit einer Kontrolleinheit verbunden sind. Die Lichtquelle wird durch die Kontrolleinheit gesteuert.

US 4,785,295 offenbart eine Vorrichtung zum Melden der Anwesenheit eines Objekts (z.B. Papier) auf einem Fließband, mit einer Lichtquelle und einem Fotosensor. In US 4,785,295 wird eine Alterung und / oder Verschmutzung der optischen Einrichtung detektiert und korrigiert, dadurch dass die Lichtquelle und der Fotosensor mit einer Kontrolleinheit einen Regelkreis zur Regelung der Lichtquelle bilden.

Der Erfindung liegt die Aufgabe zugrunde, eine Aktivierungsvorrichtung der eingangs genannten Art bereitzustellen, mit der sich auf einfache Weise aktivierte Indikatoren bereitstellen lassen.
Diese Aufgabe wird bei der Aktivierungsvorrichtung der eingangs genannten Art erfindungsgemäß dadurch gelöst, daß mindestens ein Fotosensor und/oder mindestens ein Überprüfungssensor Vorgeschen ist, der Zusammen mit einer Regelungseinrichtung einen Regelkreis Malisiert, über welchen die Bestrahlungszeit und/oder die Bestrahlungsstärke der UV-Lichtquelleneinrichtung regelbar ist.
Durch die Regelung der Bestrahlungszeit und/oder Bestrahlungsstärke läßt sich die Zeitabhängigkeit und/oder Temperaturabhängigkeit der "Abregung" nach der Aktivierung einstellen. Dadurch können über die Aktivierungsvorrichtung Zeitintegratoreigenschaften bzw. Temperaturintegratoreigenschaften bzw. Zeit-Temperatur-Integratoreigenschaften des Indikators eingestellt werden. Dadurch ist eine Anpassung an eine zu kennzeichnende Ware möglich. Beispielsweise lassen sich schneller verderbliche Waren mit entsprechend aktivierten Indikatoren versehen, die sich "schneller" abregen.

Durch die Regelungseinrichtung läßt sich auch die Alterung und/oder eine Verschmutzung der UV-Lichtquelleneinrichtung bezüglich der UV-Lichtabstrahlung berücksichtigen. Es läßt sich ein Regelkreis realisieren, über den die Bestrahlungsstärke und/oder Bestrahlungszeit der UV-Lichtquelleneinrichtung so nachgeregelt wird, daß die Alterung und/oder die Verschmutzung kompensiert wird.

Die genannte Aufgabe wird ferner erfindungsgemäß dadurch gelöst, daß die UV-Lichtquelleneinrichtung mindestens eine UV-Leuchtdiode umfaßt. UV-Leuchtdioden lassen sich auf einfache Weise ansteuern und nehmen einen geringen Platzbedarf ein. Die Aktivierungsvorrichtung läßt sich dadurch platzsparend ausbilden. Dadurch läßt sie sich beispielsweise in ein Etikettiergerät und insbesondere Hand-Etikettiergerät integrieren. Weiterhin weisen UV-Leuchtdioden einen relativ geringen elektrischen Energieverbrauch auf. Weiterhin läßt sich das abgestrahlte Licht auf einfache Weise fokussieren. Indikatoren lassen sich auf einfache Weise in einem Durchlaufprozeß aktivieren.

Es ist grundsätzlich möglich, daß die Steuerung der Bestrahlungszeit und/oder Bestrahlungsstärke über Blenden erfolgt, die mechanisch bewegt werden. Vorteilhaft ist es, wenn durch die Regelungseinrichtung die Lichterzeugung an der UV-Lichtquelleneinrichtung regelbar ist. Es müssen dann keine mechanischen Elemente vorgesehen werden. Eine solche Regelung der Lichterzeugung läßt sich auf einfache Weise durchführen, wenn die UV-Lichtquelleneinrichtung UV-Leuchtdioden umfaßt.

Günstig ist es, wenn durch die Regelungseinrichtung die elektrische Beaufschlagung der UV-Lichtquelleneinrichtung regelbar ist. Die elektrische Beaufschlagung ist auf einfache Weise variierbar. Wenn die UV-Lichtquelleneinrichtung UV-Leuchtdioden umfaßt, dann läßt sich dadurch auf einfache Weise die Bestrahlungsstärke (durch die Stromstärke) und die Bestrahlungszeit (durch Beaufschlagung bzw. Nicht-Beaufschlagung) einstellen.

Insbesondere ist durch die Regelungseinrichtung die Bestrahlungszeit zwischen 0,05 s und 20 s und vorzugsweise zwischen 0,1 s und 10 s einstellbar. Dadurch läßt sich die Indikatoreigenschaft eines aktivierten Indikators gezielt einstellen.

Aus dem gleichen Grund ist es günstig, wenn durch die Regelungseinrichtung die Bestrahlungsstärke zwischen 25 mW/cm² und 400 mW/cm² und insbesondere zwischen 50 mW/cm² und 200 mW/cm² einstellbar ist.

Es kann vorgesehen sein, daß die UV-Lichtquelleneinrichtung UV-Licht im Wellenlängenbereich zwischen 300 nm und 430 nm und insbesondere im Wellenlängenbereich zwischen 350 nm und 380 nm abstrahlt. Dadurch lassen sich bekannte Indikatormaterialien auf sichere Weise aktivieren.

Es ist günstig, wenn eine Mehrzahl von UV-Leuchtdioden in einer oder mehreren Reihen angeordnet sind. Dadurch läßt sich ein großer Flächenbereich mit den UV-Leuchtdioden ausleuchten. Dadurch wiederum läßt sich ein Indikator über seine gesamte Oberfläche sicher aktivieren bzw. es lassen sich gleichzeitig mehrere Indikatoren aktivieren.

Der Fotosensor kann die Bestrahlungsstärke bzw. Bestrahlungszeit der UV-Lichtquelleneinrichtung ermitteln. Dadurch wird es beispielsweise ermöglicht, die UV-Lichtquelleneinrichtung zu kalibrieren. Dadurch wiederum ist eine exakte Regelung der Bestrahlungsstärke/Bestrahlungszeit auch über einen langen Zeitraum erreichbar.

Insbesondere ist der mindestens eine Fotosensor der UV-Lichtquelleneinrichtung und/oder einer Referenz-Lichtquelleneinrichtung zugewandt angeordnet, um eine effektive Erfassung von abgestrahltem Licht zu ermöglichen. Es kann eine Referenz-Lichtquelleneinrichtung vorgesehen sein, welche beispielsweise den gleichen Leuchtdiodentyp aufweist wie die UV-Lichtquelleneinrichtung; bei einem parallelen Alterungsprozeß und/oder gleicher Verschmutzung der Leuchtdioden läßt sich anhand der Meßergebnisse für die Referenz-Lichtquelleneinrichtung die UV-Lichtquelleneinrichtung kalibrieren.

Günstig ist es, wenn die UV-Lichtquelleneinrichtung und der mindestens eine Fotosensor so angeordnet sind, daß zu aktivierende Indikatoren zwischen ihnen durchführbar sind. Der mindestens eine Fotosensor kann dabei so angeordnet sein, daß er selber durch Indikatoren bzw. einen Träger von Indikatoren nicht abgeschattet wird. Er kann auch so angeordnet sein, daß er nur dann wirksam ist (d. h. bestrahlt wird), wenn keine Indikatoren (welche insbesondere an Etiketten angeordnet sind) durchgeführt werden. Dann kann beispielsweise vor Einlegen eines neuen Etikettenbands ein Kalibrierungsvorgang und/oder Überprüfungsvorgang der UV-Lichtquelleneinrichtung durchgeführt werden.

Bevorzugt ist es, wenn die UV-Lichtquelleneinrichtung und/oder eine Referenz-Lichtquelleneinrichtung Speichermittel zum Speichern der Betriebszeit der UV-Lichtquelleneinrichtung und/oder der Referenz-Lichtquelleneinrichtung aufweist, insbesondere zum Speichern der Betriebsstundenzahl. Bei den Speichermitteln kann es sich beispielsweise um nichtflüchtige Speichermittel, insbesondere einen auf einer Platine angeordneten Speicherbaustein, bevorzugt ein EEPROM, handeln. Hierdurch kann eine fortgeschrittene Alterung der UV-Lichtquelleneinrichtung und/oder der Referenz-Lichtquelleneinrichtung, bei der ein Nachregeln nicht mehr sinnvoll ist, erkannt werden. Bevorzugt sind die Speichermittel und die UV-Lichtquelleneinrichtung und/oder die Referenz-Lichtquelleneinrichtung auf einer gemeinsamen Platine angeordnet, so dass bei einem Defekt der UV-Lichtquelleneinrichtung und/oder der Referenz-Lichtquelleneinrichtung oder bei Erreichen einer bestimmten und/oder maximal gewünschten Betriebszeit die Speichermittel und die UV-Lichtquelleneinrichtung und/oder die Referenz-Lichtquelleneinrichtung gemeinsam ausgetauscht werden können. Besonders bevorzugt ist es, wenn die Regelungseinrichtung auf einer Platine angeordnet ist und die UV-Lichtquelleneinrichtung und/oder eine Referenz-Lichtquelleneinrichtung auf einer dazu separaten weiteren Platine angeordnet ist.

Günstig ist es, wenn der mindestens eine Überprüfungssensor zur Prüfung der Aktivierung von Indikatoren vorgesehen ist. Dadurch kann überprüft werden, ob ein Indikator nach Durchlaufen der Aktivierungsvorrichtung tatsächlich aktiviert wurde bzw. "richtig" aktiviert wurde. Dadurch läßt sich wiederum die Kalibrierung und das Funktionieren der UV-Lichtquelleneinrichtung überprüfen. Es kann ein Regelkreis zur Regelung der UV-Lichtquelleneinrichtung aufgrund der Meßergebnisse des Überprüfungssensors realisiert werden.

Insbesondere ist der mindestens eine Überprüfungssensor der UV-Lichtquelleneinrichtung nachgeordnet, um eine effektive Überprüfung zu ermöglichen.

Wenn der Indikator fotochrome Eigenschaften aufweist, dann ist der mindestens eine Überprüfungssensor vorzugsweise ein Farbsensor. Über einen Farbsensor läßt sich prüfen, ob ein Indikator nach der Aktivierung die gewünschte Farbe erreicht hat. Insbesondere lassen sich durch einen Farbsensor die Verhältnisse von bestimmten Farbvalenzen (beispielsweise RGB-Werten) und die Farbdichte messen.

Günstig ist es, wenn ein Indikator durch Aktivierung eine bestimmte Farbe annimmt, wobei die Farbe sich abhängig von der Zeit und/oder der Temperatur nach der Aktivierung verändert. Entsprechende Indikatormaterialien sind in der DE 198 03 208 C2 beschrieben, auf die ausdrücklich Bezug genommen wird. Durch einen Farbsensor läßt sich dann auf einfache Weise das Aktivierungsergebnis überprüfen.

Der Erfindung liegt ferner die Aufgabe zugrunde, eine Vorrichtung zur Bereitstellung von aktivierten temperatursensitiven und/oder zeitsensitiven Indikatoren zur Warenkennzeichnung bereitzustellen, welche einfach aufgebaut ist.

Diese Aufgabe wird erfindungsgemäß dadurch gelöst, daß eine erfindungsgemäße Aktivierungsvorrichtung vorgesehen ist.

Der Aktivierungsvorrichtung ist insbesondere eine Aufbringeinrichtung für einen UV-Schutzfilter nachgeordnet. In der Regel sind Indikatormaterialien bezüglich der UV-Lichtaktivierung reversibel. Durch das Aufbringen eines UV-Schutzfilters auf einen aktivierten Indikator ist das Gesamtsystem irreversibel gemacht, da eine nachfolgende UV-Lichtaktivierung nicht mehr möglich ist. Dadurch wird der entsprechende Indikator manipulationssicher, das heißt die Zeitintegratoreigenschaften bzw. Temperaturintegratoreigenschaften bzw. Zeit-Temperatur-Integratoreigenschaften können nachträglich nicht mehr durch UV-Lichtbestrahlung beeinflußt werden.

Günstig ist es, wenn eine Aufnahme für einen Vorrat an aktivierbaren Indikatoren vorgesehen ist. Dadurch wird es ermöglicht, eine große Anzahl von Indikatoren in einem kurzen Zeitraum zu aktivieren, um auf einfache und schnelle Weise Indikatoren zur Warenkennzeichnung bereitzustellen, welche aktiviert sind. Die Indikatoren lassen sich in einem Durchlaufprozeß aktivieren.

Insbesondere ist die Aufnahme zum Halten einer Rolle ausgebildet. Bei der Rolle handelt es sich insbesondere um eine Etikettenrolle. Diese umfaßt beispielsweise ein Trägerband, auf dem Etiketten mit Indikatoren angeordnet sind, oder die Rolle ist selber durch ein Etikettenband gebildet, wobei auf dem Etikettenband Indikatoren angeordnet sind. Die Etiketten können selbstklebend sein.

Insbesondere sind die Indikatoren an Etiketten angeordnet. Es lassen sich dadurch selbstklebende oder nicht-selbstklebende Etiketten bereitstellen, mittels welchen sich Waren kennzeichnen lassen.

Es ist dabei günstig, wenn die Etiketten bedruckbar sind und insbesondere außerhalb eines Indikators bedruckbar sind. Dadurch können auf den Etiketten auch noch zusätzliche Daten wie Warendaten abgedruckt werden. Beispielsweise sind die Etiketten über Thermodruck bedruckbar; sie können über Thermotransfer oder über direkten Thermodruck bedruckbar sein. Es sind auch andere Druckverfahren wie beispielsweise Tintenstrahlbedrucken möglich.

Insbesondere sind die Etiketten an einem Etikettenband gebildet oder auf einem Trägerband angeordnet. Beispielsweise sind die Etiketten an einem Etikettenband ohne Träger angeordnet (Linerless-Band). Die Etiketten müssen dazu mit einer entsprechenden Antihaft-Beschichtung versehen sein, wenn sie eine Klebeseite aufweisen. Ein UV-Schutzfilter muß auf der Antihaft-Beschichtung haften können. Es ist auch möglich, daß selbstklebende Etiketten auf einem Trägerband (Liner) angeordnet sind.

Günstig ist es, wenn eine Spendeeinrichtung zum Spenden von Etiketten vorgesehen ist. Dadurch lassen sich auf einfache Weise Etiketten von der Vorrichtung entnehmen bzw. durch diese bereitstellen, welche mit einem aktivierten Indikator versehen sind. Der Spendeeinrichtung kann eine Applikatoreinrichtung zum Anbringen von Etiketten an einer Ware/Warenverpackung nachgeordnet sein. Die Etiketten lassen sich dann insbesondere automatisch beispielsweise auf Waren/Warenverpackungen anbringen, welche auf einem Förderband vorbeibewegt werden.

Der Erfindung liegt ferner die Aufgabe zugrunde, ein Verfahren der eingangs genannten Art bereitzustellen, welches bei der Variabilität bezüglich des Einsatzes der Warenkennzeichnung erlaubt.

Diese Aufgabe wird erfindungsgemäß dadurch gelöst, daß der Indikator mit UV-Licht bestrahlt wird und Bestrahlungszeit und/oder Bestrahlungsstärke zur Einstellung der Temperatursensitivität und/oder Zeitsensitivität des Indikators geregelt wird.

Ein Bediener kann dann über Einwirkung auf eine Regelungseinrichtung die Zeitintegratoreigenschaften bzw. Temperaturintegratoreigenschaften bzw. Zeit-Temperatur-Integratoreigenschaften von Indikatoren angepaßt an die zu kennzeichnende Ware einstellen. Mindestens innerhalb gewisser Grenzen kann dann ein Indikatormaterial variabel aktiviert werden.

Günstig ist es, wenn der Indikator über mindestens eine UV-Leuchtdiode beleuchtet wird. Dadurch läßt sich das Verfahren auf einfache Weise durchführen.

Insbesondere wird zur Regelung der Bestrahlungszeit und/oder Bestrahlungsstärke die elektrische Beaufschlagung der mindestens einen Leuchtdiode geregelt. Dadurch läßt sich auf einfache Weise die Lichterzeugung an der UV-Leuchtdiode einstellen.

Es ist ferner günstig, wenn durch mindestens einen Fotosensor die Emission der UV-Lichtquelle gemessen wird. Dadurch läßt sich das System kalibrieren, um so wiederum eine genau eingestellte Aktivierung eines Indikators durchführen zu können.

Es ist ferner günstig, wenn durch einen Überprüfungssensor eine Aktivierung des Indikators geprüft wird. Insbesondere wird eine Farbe des Indikators nach der Aktivierung geprüft. Über die Detektionsergebnisse des Überprüfungssensors läßt sich auch eine Nachregelung einer Lichtquelle für die UV-Bestrahlung durchführen, d. h. eine Kalibrierung durchführen.

Die nachfolgende Beschreibung bevorzugter Ausführungsformen dient im Zusammenhang mit der Zeichnung der näheren Erläuterung der Erfindung. Es zeigen:
- Figur 1: eine schematische Darstellung eines ersten Ausführungsbeispiels einer Vorrichtung zur Bereitstellung von aktivierten Indikatoren zur Warenkennzeichnung;
- Figur 2: ein zweites Ausführungsbeispiel einer Vorrichtung zur Bereitstellung von Indikatoren zur Warenkennzeichnung;
- Figur 3: eine vergrößerte Darstellung aus dem Bereich A gemäß Figur 1 und 2 in perspektivischer Ansicht; und
- Figur 4: eine schematische Darstellung von Ausführungsbeispielen eines Indikators in seiner Zeitabhängigkeit und Temperaturabhängigkeit nach der Aktivierung.

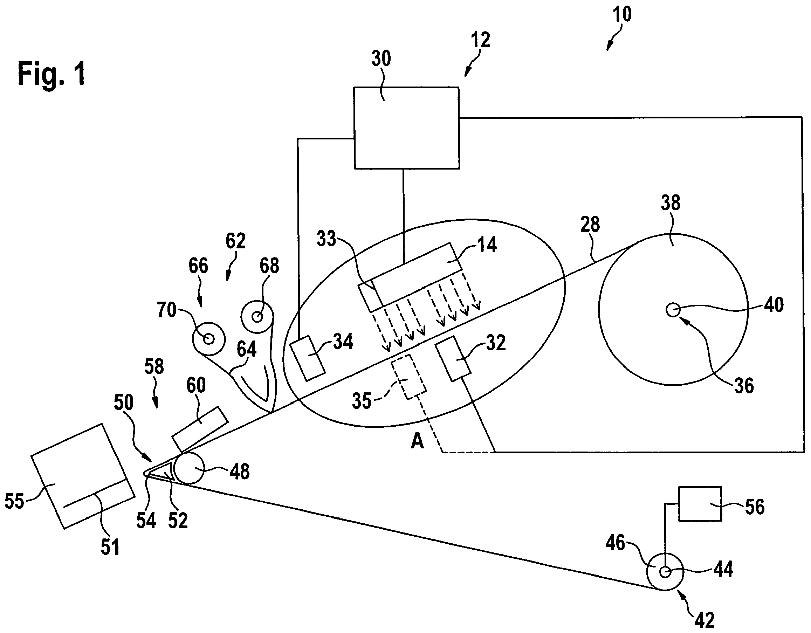

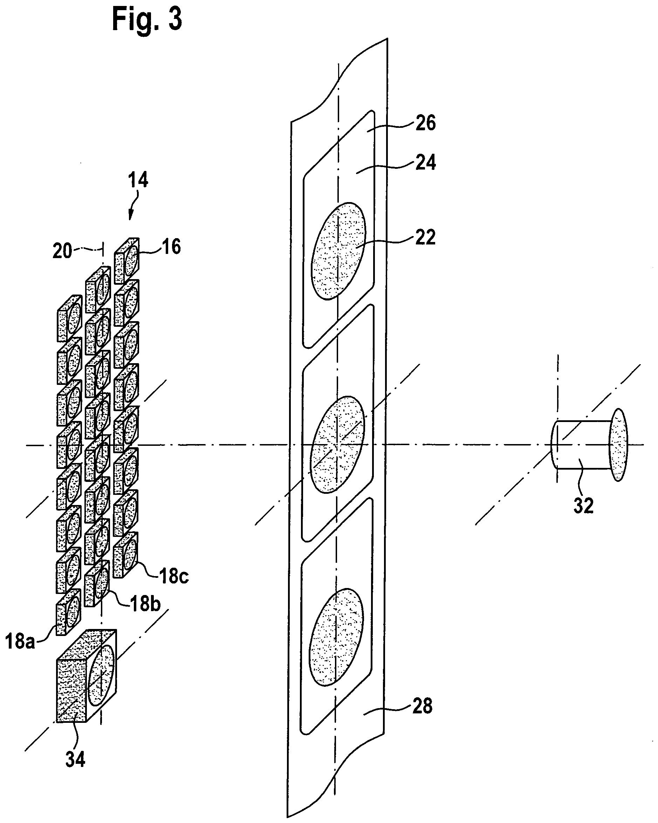

Ein erstes Ausführungsbeispiel einer Vorrichtung zur Bereitstellung von aktivierten temperatursensitiven und/oder zeitintensiven Indikatoren zur Warenkennzeichnung, welches in Figur 1 gezeigt und dort mit 10 bezeichnet ist, umfaßt eine Aktivierungsvorrichtung 12 zur Aktivierung von Indikatoren. Die Aktivierungsvorrichtung 12 weist eine UV-Lichtquelleneinrichtung 14 auf, durch welche zu aktivierende Indikatoren mit UV-Licht beleuchtbar sind. Die UV-Lichtquelleneinrichtung 14 ist mittels UV-Leuchtdioden 16 (Figur 3) gebildet. Die Leuchtdioden 16 sind in einer oder mehreren Reihen 18a, 18b, 18c angeordnet. Innerhalb einer Reihe sind die UV-Leuchtdioden 16 vorzugsweise auf einer geraden Linie 20 angeordnet. Unterschiedliche Reihen 18a, 18b, 18c sind vorzugsweise parallel zueinander ausgerichtet.

Die UV-Lichtquelleneinrichtung 14 ist so angeordnet, daß ein bestimmter Flächenbereich von der UV-Lichtquelleneinrichtung 14 beleuchtbar ist. Durch diesen Flächenbereich lassen sich Indikatoren 22 durchführen. Die Indikatoren 22 sind insbesondere an einem Träger 24 angeordnet, wobei es sich bei dem Träger 24 vorzugsweise um ein (bedruckbares) Etikett 26 handelt. Ein Etikett 26 kann bereits mit einem oder mehreren Vergleichsfeldern für einen Indikator 22 bedruckt sein; beispielsweise ist ein Vergleichsfeld als Vergleichsfarbenfeld ausgebildet. Es ist dabei möglich, daß die Etiketten 26 getrennt sind oder ein zusammenhängendes Etikettenband bilden. Es ist weiterhin möglich, daß die Träger 24 für die Indikatoren 22 selber wieder auf einem Trägerband 28 angeordnet sind. Beispielsweise sind die Etiketten 26 selbstklebend und das Trägerband 28 bildet einen Liner.

Es ist auch grundsätzlich möglich, daß die Etiketten 26 trägerbandfrei als Linerless-Etiketten ausgebildet sind.

Die Aktivierungsvorrichtung 12 umfaßt eine Regelungsvorrichtung 30, durch welche die Lichtemission der UV-Lichtquelleneinrichtung 14 bezüglich Bestrahlungszeit und Bestrahlungsstärke (Intensität) regelbar ist. Die Regelungseinrichtung 30 regelt insbesondere die Lichterzeugung an den UV-Leuchtdioden 16 selber. Dazu wird die Strombeaufschlagung der UV-Lichtquelleneinrichtung 14 geregelt, um die Bestrahlungsstärke und die Bestrahlungszeit einstellen zu können.

Es ist dabei vorgesehen, daß die Bestrahlungszeit mindestens für einen Zeitraum zwischen 0,05 s und 20 s und vorzugsweise zwischen 0,1 s und 10 s einstellbar ist und ferner die Bestrahlungsstärke mindestens in einem Bereich zwischen 25 mW/cm² und 400 mW/cm² und vorzugsweise zwischen 50 mW/cm² bis 200 mW/cm² einstellbar ist.

Die Wellenlänge des Lichts, welches von den UV-Lichtdioden 16 ausgestrahlt wird, liegt vorzugsweise zwischen 350 nm und 380 nm.

Der UV-Lichtquelleneinrichtung 14 ist mindestens ein UV-lichtempfindlicher Fotosensor 32 zugeordnet. Dieser mindestens eine Fotosensor 32 ist der UV-Lichtquelleneinrichtung 14 gegenüberliegend angeordnet, wobei die Indikatoren 22 zwischen der UV-Lichtquelleneinrichtung 14 und dem Fotosensor 32 durchführbar sind. Durch den Fotosensor 32 läßt sich die Bestrahlungsstärke/Bestrahlungszeit der UV-Lichtquelleneinrichtung 14 prüfen. Dadurch läßt sich eine Kalibrierung der Aktivierungsvorrichtung 12 beispielsweise vor Einlegen eines neuen Etikettenbands durchführen. Durch den Fotosensor 32 läßt sich (beispielsweise vor Einlegen eines neuen Etikettenbands) auch prüfen, ob von der UV-Lichtquelleneinrichtung 14 überhaupt Licht emittiert wird. Dadurch läßt sich eine Störung der UV-Lichtquelleneinrichtung 14 erkennen.

Es kann auch eine Referenz-Lichtquelleneinrichtung 33 vorgesehen sein, welche vorzugsweise gleich angesteuert wird wie die UV-Lichtquelleneinrichtung 14. Insbesondere weist die Referenz-Lichtquelleneinrichtung 14 ein oder mehrere baugleiche UV-Leuchtdioden wie die Lichtquelleneinrichtung 14 auf. Der Referenz-Lichtquelleneinrichtung ist ein Fotosensor 35 zugeordnet, welcher von dieser bestrahlt wird. Der Fotosensor 35 und die Referenz-Lichtquelleneinrichtung 33 sind so angeordnet, daß die Strahlbeaufschlagung des Fotosensors 35 nicht durch durchgeführte Etiketten beschattet wird. Hierzu ist zumindest der Fotosensor 35 oder zumindest die Referenz-Lichtquelleneinrichtung 33 seitlich des Trägerbandes 28 angeordnet, so daß von der Referenz-Lichtquelleneinrichtung 33 in Richtung des Fotosensors 35 ausgesandte UV-Strahlung nicht durch das Trägerband 28 blockiert wird. Da die Referenz-Lichtquelleneinrichtung 33 im wesentlichen die gleichen Eigenschaften wie die UV-Lichtquelleneinrichtung 14 aufweist, läßt sich letztere - indirekt - ständig durch den Fotosensor 35 überwachen und gegebenenfalls nachregeln. Grundsätzlich kann ein seitlich des Trägerbandes 28 angeordneter Fotosensor 35 jedoch auch der UV-Lichtquelleneinrichtung 14 selbst zugeordnet sein, die dann so auszubilden und anzuordnen ist, dass ein zumindest geringer Teil des ausgesandten Lichts nicht auf das Trägerband 28 sondern auf den Fotosensor 35 trifft.

Die Aktivierungsvorrichtung 12 umfaßt ferner mindestens einen Überprüfungssensor 34, welcher bezogen auf den bzw. die Träger 24 für die Indikatoren 22 auf der gleichen Seite wie die UV-Lichtquelleneinrichtung 14 angeordnet ist. Dieser Überprüfungssensor 34 ist insbesondere ein Farbsensor. Durch ihn kann der UV-Lichtquelleneinrichtung 14 nachfolgend überprüft werden, ob eine Aktivierung tatsächlich und im erforderlichen Umfang stattgefunden hat, das heißt ob der gewünschte Energieübertrag auf die Indikatoren 22 tatsächlich erfolgt ist. Hierdurch können fehlerhafte und/oder fehlerhaft belichtete Indikatoren 22 erkannt und ausgesteuert werden. Anstelle des der UV-Lichtquelleneinrichtung 14 nachgeordneten Überprüfungssensors 34, oder zusätzlich, kann auch ein automatisch arbeitender oder manuell bedienbarer, externer Überprüfungssensor vorgesehen sein, um die korrekte Aktivierung zumindest stichprobenartig zu überprüfen. Grundsätzlich ist es auch möglich, daß ein Überprüfungssensor in eine nachstehend näher erläuterte Druckeinrichtung integriert ist.

Beispielsweise kann mit Hilfe des Fotosensors 32 und/oder 35 und der Regelungseinrichtung 30 ein Regelkreis realisiert werden, über den die Alterung und/oder eine Verschmutzung der Lichtquellen der UV-Lichtquelleneinrichtung 14 (das heißt der UV-Leuchtdioden 16) automatisch ausgeregelt wird, indem die Bestrahlungsstärke und/oder die Bestrahlungszeit entsprechend der Alterung und/oder der Verschmutzung automatisch nachgeregelt wird.

Es ist auch grundsätzlich möglich, daß kein Fotosensor 32 bzw. 35 und nur ein Überprüfungssensor 34 vorgesehen wird, welcher zusammen mit der Regelungseinrichtung 30 einen Regelkreis bildet, über den die Alterung und/oder eine Verschmutzung der Lichtquellen der UV-Lichtquelleneinrichtung 14 automatisch ausgeregelt wird.

Der Fotosensor 32 (und gegebenenfalls der Fotosensor 35) und der Überprüfungssensor 34 übermitteln ihre Sensorsignale über entsprechende Leitungen an die Regelungseinrichtung 30. Diese übermittelt ihre Regelungssignale über eine entsprechende Leitung an die UV-Lichtquelleneinrichtung 14.

Die Vorrichtung 10 umfaßt eine Aufnahme 36 zum Halten einer Rolle 38. Die Rolle 38 ist beispielsweise eine Trägerbandrolle mit einem abwickelbaren Trägerband 28, auf welchem die Indikatoren 22 an entsprechenden Trägern 24 (beispielsweise Etiketten 26) angeordnet sind. Das Trägerband 28 ist zwischen der UV-Lichtquelleneinrichtung 14 und dem Fotosensor 32 geführt und an dem Überprüfungssensor 34 vorbeigeführt.

Die Aufnahme 36 umfaßt beispielsweise einen Haltedorn 40 für die Rolle 38.

Grundsätzlich können verschiedene Arten von Indikatoren zur Verfügung stehen, die sich insbesondere hinsichtlich ihrer Farbe und/oder der zur Aktivierung nötigen Bestrahlungsenergie unterscheiden. Beispielsweise können für verschiedene Fleischssorten verschiedene Indikatorenarten verwendet werden. Indikatoren einer Art können jeweils auf einer Rolle 38 aufgewickelt sein, wobei sich verschiedenartige Rollen durch die Art ihrer Indikatoren unterscheiden. Mittels des Fotosensors 32 oder 35 bzw. der Fotosensoren 32, 35 kann dann sichergestellt werden, daß der für die jeweilige Indikatorenart gewünschte Energieübertrag stattfindet. Durch die Kombination von einem oder zwei Fotosensoren 32, 35 und Überprüfungssensor 34 wird ermöglicht, festzustellen, ob für die jeweils mit den entsprechenden Indikatoren 22 zu kennzeichnende Ware eine "richtige" Rolle eingelegt wurde. Hierbei kann mittels des Fotosensors bzw. der Fotosensoren 32, 35 zunächst sichergestellt werden, daß der für die jeweilige Indikatorenart gewünschte Energieübertrag stattfindet. Nach der Aktivierung kann mittels des Überprüfungssensors 34 beispielsweise ein Farb- und/oder Intensitätswert der Indikatoren 22 festgestellt werden. Weicht der festgestellte Wert von dem für die jeweilige Indikatorenart erwarteten Wert ab, kann, insbesondere wenn andere Fehlerquellen ausscheiden, darauf geschlossen werden, dass eine "falsche" Rolle eingelegt wurde.

Es kann eine Halteeinrichtung 42 vorgesehen sein, welche insbesondere einen Haltedorn 44 umfaßt, durch die eine Rolle 46 mit aufgewickeltem Trägerband gehalten wird.

Die Vorrichtung 10 umfaßt ein Umlenkelement 48, über welches das Trägerband 28 zu der Halteeinrichtung 42 umgelenkt wird. An oder in der Nähe des Umlenkelements 48 ist eine Spendeeinrichtung 50 für Etiketten gebildet. An der Spendeeinrichtung 50 lassen sich Etiketten 51 von dem Trägerband 28 lösen und an der Vorrichtung 10 entnehmen. (Die Vorrichtung 10 ist dann eine Etikettiervorrichtung.) Die Spendeeinrichtung 50 umfaßt beispielsweise ein keilförmiges Element 52 mit einer Spendekante 54.

Die Rolle 46 wird durch ein etikettenfreies Trägerband gebildet, das heißt ein Trägerband, welches aufgrund Ablösung von Etiketten 51 an der Spendeeinrichtung 50 etikettenfrei ist.

Der Spendeeinrichtung 50 kann eine Applikatoreinrichtung 55 nachgeordnet sein, über die Etiketten 51 an Waren bzw. Warenverpackungen applizierbar sind. Dadurch läßt sich eine automatische Etikettenanbringung realisieren. Beispielsweise werden Etiketten (mit aktivierten Indikatoren 22) an Waren/Warenverpackungen, welche auf einem Förderband geführt sind, automatisch angebracht.

Die Applikatoreinrichtung 55 ist beispielsweise als Blas-, Stempel- oder Andrückapplikator ausgebildet.

Es kann vorgesehen sein, daß die Halteeinrichtung 42 durch einen Antrieb 56 angetrieben ist, um entsprechend das Trägerband aufzuwickeln.

Es ist auch möglich, daß die Etiketten selber ein Band bilden, so daß kein Trägerband vorgesehen ist (Linerless-Etiketten). Die Führung des entsprechenden Etikettenbands in der Vorrichtung 10 ist dann so ausgebildet, daß Elemente der Führung, welche, wenn die Etiketten selbstklebend sind, mit einer Klebeseite des Etikettenbands in Berührung kommen, mit einer Antihaft-Beschichtung versehen sind.

Die Vorrichtung 10 umfaßt mindestens eine Druckeinrichtung 58. Die Druckeinrichtung 58 selber weist einen Druckkopf 60 und ein Gegenelement und insbesondere eine Druckwalze auf. Insbesondere ist das Umlenkelement 48 als Druckwalze ausgebildet.

Die Vorrichtung 10 umfaßt eine Aufbringeinrichtung 62, durch welche ein UV-Schutzfilter auf einen Indikator 22 nach dessen Aktivierung aufbringbar ist. Durch den UV-Schutzfilter ist ein Schutz eines Indikators gegen Manipulation erreicht; ein Indikator 22 kann nach Aufbringung des Schutzfilters nicht erneut aktiviert werden, so daß die Vorrichtung 10 irreversibel aktivierte Indikatoren 22 bereitstellt.

Über die Aufbringeinrichtung 62 läßt sich ein UV-Schutzfilter auf einen Indikator 22 über ein Band 64 aufbringen, wobei das Band entsprechende UV-Schutzfiltereigenschaften hat. Die Aufbringeinrichtung 62 umfaßt dazu eine Bandführungseinrichtung 66, über welche das Band 64 so führbar ist, daß UV-Schutzfilter auf die aktivierten Indikatoren 22 aufbringbar sind.

Beispielsweise umfaßt das Band 64 ein UV-Schutzfilter und ist transparent ausgebildet; es kann auch selbstklebend sein. Es wird in Teilelementen (als Etiketten) auf jeweilige Indikatoren 22 aufgebracht oder fortlaufend aufgebracht.

Die Bandführungseinrichtung 66 umfaßt beispielsweise einen ersten Rollenhalter 68 und einen zweiten Rollenhalter 70. Auf den ersten Rollenhalter 68 ist eine Bandrolle aufsetzbar und das Band ist von dort abwickelbar. Über den zweiten Rollenhalter 70 läßt sich eine Rolle aufwickeln. Der zweite Rollenhalter 70 ist beispielsweise angetrieben.

Die Vorrichtung 10 läßt sich kompakt ausbilden. Beispielsweise ist sie als Handgerät ausgebildet. Sie ist auch in einem Etikettierer mit Applikatoreinrichtung 55 integrierbar. Es lassen sich dann Etiketten mit aktivierten Indikatoren 22 bereitstellen und automatisch an Waren/Warenverpackungen anbringen.

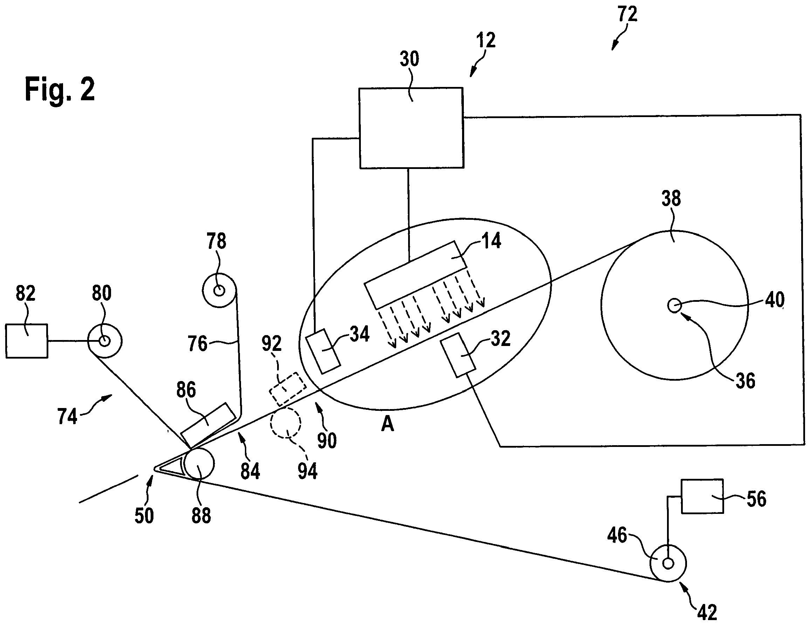

Bei einem zweiten Ausführungsbeispiel einer erfindungsgemäßen Vorrichtung, welches in Figur 2 und dort mit 72 bezeichnet ist, ist eine Aktivierungsvorrichtung vorgesehen, welche grundsätzlich gleich ausgebildet ist wie die Aktivierungsvorrichtung 12 der Vorrichtung 10. Es werden deshalb für diese Aktivierungsvorrichtung der Vorrichtung 72 gleiche Bezugszeichen verwendet.

Die Aufnahme für eine Rolle 38 ist ebenfalls gleich ausgebildet, so daß gleiche Bezugszeichen verwendet werden. Auch die Spendeeinrichtung ist grundsätzlich gleich ausgebildet wie oben beschrieben.

Die Vorrichtung 72 umfaßt eine Bandführungseinrichtung 74 für ein Transferband 76. Bei dem Transferband 76 handelt es sich beispielsweise um ein Thermotransferband.

Die Bandführungseinrichtung 74 weist einen ersten Rollenhalter 78 und einen zweiten Rollenhalter 80 auf, zwischen welchen das Transferband 76 geführt ist. Insbesondere wird das Transferband 76 von einer Rolle, welche an dem ersten Rollenhalter 78 sitzt, abgewickelt und an einer Rolle, welche an dem zweiten Rollenhalter 80 sitzt, aufgewickelt. Beispielsweise ist der zweite Rollenhalter 80 über einen Antrieb 82 angetrieben.

Die Vorrichtung 72 umfaßt eine Druckeinrichtung 84 mit einem Druckkopf 86 und einer Druckwalze als Gegenelement 88. Etiketten 26 an einem Etikettenband bzw. auf einem Trägerband 28 werden zwischen dem Druckkopf 86 und dem Gegenelement 88 durchgeführt.

Die Bandführungseinrichtung 74 ist so ausgebildet, daß das Transferband 76 an dem Druckkopf 86 vorbeigeführt ist. Das Transferband 76 umfaßt ein UV-Schutzfiltermaterial. Durch den Druckkopf 86 läßt es sich dann auf entsprechende aktivierte Indikatoren 22 aufbringen.

Der Druckkopf 86 ist dabei so steuerbar, daß sich UV-Schutzfiltermaterial gezielt auf den Indikator 22 entsprechend dessen geometrischen Abmessungen aufbringen läßt.

Es ist dabei grundsätzlich möglich, (wenn das Transferband 76 dazu geeignet ist) entsprechende Etiketten 26 auch außerhalb des Indikators 22 mit Informationen wie beispielsweise Wareninformationen durch die Druckeinrichtung 84 zu bedrucken.

Es ist auch möglich, daß neben der Druckeinrichtung 84 (erste Druckeinrichtung) eine zweite Druckeinrichtung 90 vorgesehen ist, welche zwischen der Druckeinrichtung 84 und der Aktivierungseinrichtung 12 angeordnet sein kann oder der Druckeinrichtung 84 nachgeschaltet angeordnet sein kann. Die zweite Druckeinrichtung 90 umfaßt insbesondere einen Druckkopf 92 und ein Gegenelement 94. Durch die zweite Druckeinrichtung 90 lassen sich unabhängig von der Druckeinrichtung 84 Informationen auf Etiketten 26 abdrucken.

Es kann auch vorgesehen sein, daß die Vorrichtung 72 Etiketten mit aktivierten und UV-Schutzfiltern versehene Indikatoren 22 bereitstellt, die in eine Etikettiervorrichtung mit einer Druckeinrichtung eingekoppelt werden, um die Etiketten außerhalb der Indikatoren 22 mit Information wie beispielsweise Warendaten zu bedrucken. In diesem Falle ist es günstig, wenn die Vorrichtung 72 keine einzelnen Etiketten bereitstellt, sondern ein Band wie beispielsweise ein Etikettenband oder ein Trägerband 28 mit nicht-abgelösten Etiketten.

Die Vorrichtungen 10 und 72 funktionieren wie folgt:

Ein Indikator 22 ist aus einem Material hergestellt, welches durch UV-Licht aktivierbar ist und temperatursensitiv und zeitsensitiv ist, das heißt nach der Anregung des Materials ist die Abregung abhängig von der Zeit nach Anregung und von der Temperatur. Insbesondere ist der Indikator 22 ein Zeit-/Temperatur-Indikator mit einer Integrationswirkung bezüglich Zeit/Temperatur. Die Startzeit ist dabei durch den Aktivierungszeitpunkt bestimmt.

Beispiele für Indikatormaterialien sind in eine Matrix eingebettete wiederaufladbare kristalline Indikatoren mit fotochromen Eigenschaften auf der Basis von Transferreaktionen. Solche Materialien sind beispielsweise in der DE 198 03 208 C2 beschrieben, auf die ausdrücklich Bezug genommen wird.

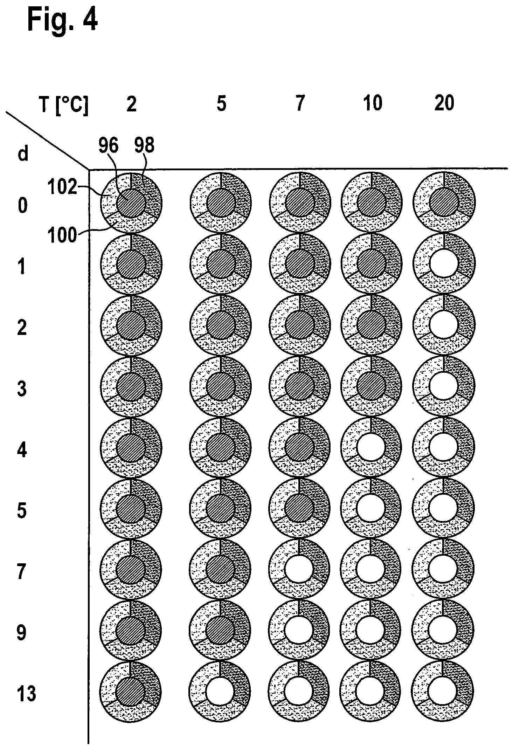

Beispielsweise kann ein Indikator je nach Zeit und Temperatur verschiedene Farben aufweisen. Es kann dabei vorgesehen sein, daß an einem Indikator 96 (Figur 4) mindestens ein festes Vergleichsfarbfeld angeordnet ist, damit der Zustand mit den Augen sofort erkennbar ist. Beispielsweise ist ein erstes Farbenfeld 98 vorgesehen, welches die Farbe unmittelbar nach der Aktivierung anzeigt. Es kann ein zweites Farbenfeld 100 vorgesehen sein, welches die Farbe - bei gleichen Temperaturbedingungen - nach einem mittleren Zeitraum anzeigt. Es kann ein drittes Farbenfeld 102 vorgesehen sein, welches die Farbe - bei gleichen Temperaturbedingungen - nach einem längeren Zeitraum anzeigt. Die Farben der Farbenfelder 98, 100 und 102 sind fest. Die Farbe des ersten Farbenfeldes symbolisiert beispielsweise einen Zustand "frisch", die Farbe des zweiten Farbenfeldes 100 einen Zustand "mittel" und die Farbe des dritten Farbenfeldes 102 symbolisiert beispielsweise einen Zustand "nicht mehr frisch".

Wenn nur ein Vergleichsfarbenfeld vorgesehen ist, symbolisiert es beispielsweise den Zustand "zu verbrauchen".

Der farbenveränderliche Indikator 96 ist beispielsweise kreisförmig ausgebildet, wobei die Farbenfelder 98, 100 und 102 den Indikator ringsegmentförmig umgeben.

Die Farbe des Indikators 96 ändert sich nach der Aktivierung Zeit-Temperaturintegral, wie in Figur 4 angedeutet. Bei höheren Temperaturen ändert sich die Farbe des Indikators 96 mit der Zeit schneller als bei niedrigeren Temperaturen.

Ein solcher aktivierter Indikator 96 läßt sich zur Warenkennzeichnung verwenden. Nach Aufbringen einer entsprechenden Warenkennzeichnung mit einem Indikator 96 durchläuft dieser Indikator 96 die gleiche Zeitentwicklung und Temperaturentwicklung wie die Ware, welche mit dem Indikator 96 gekennzeichnet ist, das heißt er ist den gleichen Zeitbedingungen und Temperaturbedingungen unterworfen. Durch den temperatursensitiven und zeitsensitiven Indikator 96 läßt sich dadurch der Warenzustand visualisieren und insbesondere der Frischgrad der Ware visualisieren. Dadurch lassen sich beispielsweise Lebensmittel bezüglich ihres Frischegrads kennzeichnen.

Die Startzeit wird durch den Aktivierungszeitpunkt gesetzt. Die Indikatoren 96 werden dazu der Aktivierungsvorrichtung 12 zugeführt, wo eine Aktivierung durch UV-Licht erfolgt. Durch die Aktivierung mit UV-Licht werden beispielsweise Transferreaktionen in dem Indikatormaterial fotochemisch induziert, wobei je nach Bindungsstärke eines Akzeptors der transferierten Spezies im Akzeptormaterial verschieden lange Entfärbungszeiten erreicht werden können (vgl. die DE 198 03 208 C2).

Durch die Regelungseinrichtung 30 ist die Bestrahlungsstärke und/oder die Bestrahlungszeit der Bestrahlung mit UV-Licht von entsprechenden Indikatoren 22, 96 einstellbar. Dadurch kann zumindest in einem gewissen Bereich die Zeitsensitivität und/oder Temperatursensitivität eines aktivierten Indikators 22 eingestellt werden. Beispielsweise kann bei erhöhter Bestrahlungsstärke eine längere Entfärbungszeit (bezogen auf gleiche Temperaturbedingungen) erreicht werden. Über die Regelungseinrichtung 30 kann daher ein Bediener die gewünschten Eigenschaften einstellen.

Über den Fotosensor 32 läßt sich eine Kalibrierung der UV-Lichtquelleneinrichtung 14 durchführen und es läßt sich überwachen, ob ein Defekt bezüglich der Beleuchtung vorliegt.

Über den Überprüfungssensor 34, bei dem es sich insbesondere um einen Farbsensor handelt, läßt sich überprüfen, ob durch die Aktivierung ein Indikator 22 die gewünschte Farbe erreicht hat.

Durch die Aufbringeinrichtung 62 bzw. die Druckeinrichtung 84 (die als Aufbringeinrichtung dient) wird ein UV-Schutzfilter auf einen aktivierten Indikator 22 aufgebracht. Dadurch wird der Indikator 22 manipulationssicher gemacht, da eine erneute Aktivierung durch UV-Licht nicht mehr möglich ist, das heißt durch den UV-Schutzfilter wird die Aktivierung irreversibel gemacht. Nur durch Ablösung des UV-Schutzfilters (die zu einer Zerstörung des Indikators 22 führt) wäre eine erneute UV-Lichtaktivierung möglich.

Es kann auch vorgesehen sein, daß ein UV-Schutzfilter auf das oder die Vergleichsfarbfelder aufgebracht wird. Insbesondere wenn ein UV-Schutzfilter für Licht im sichtbaren Spektrum nicht völlig transparent ist, läßt sich dadurch die Farbvergleichbarkeit optimieren.

Der UV-Schutzfilter wird über ein Band auf die Indikatoren 22 aufgebracht, wobei das Band direkt aufgebracht werden kann oder (wie anhand der Vorrichtung 72 beschrieben) ein Übertrag von UV-Schutzfiltermaterial von dem Transferband 76 auf einen aktivierten Indikator 22 erfolgt. Bei dem Transferband 76 handelt es sich insbesondere um ein Thermotransferband wie beispielsweise ein Carbonband, auf dem entsprechendes UV-Schutzfiltermaterial angeordnet ist.

Dieses wird über die Druckeinrichtung 84 mit dem Druckkopf 86 auf den Indikator 22 übertragen. Der Druckkopf 86 ist so ansteuerbar, daß UV-Schutzfiltermaterial entsprechend den geometrischen Abmessungen des Indikators 22 auf diesem "aufgedruckt" wird.

Dadurch lassen sich die vorhandenen Komponenten einer Etikettiervorrichtung mit einer Thermotransfer-Druckeinrichtung dazu verwenden, einen UV-Schutzfilter auf Indikatoren 22 anzuordnen.

Die Indikatoren 22 sind auf Trägern 24 wie beispielsweise Etiketten 26 angeordnet. Die Etiketten 26 sind wiederum auf einem Trägerband 28 angeordnet oder selber an einem Etikettenband gebildet. Die Indikatoren 22 werden zur Aktivierung an der UV-Lichtquelleneinrichtung 14 vorbeigeführt. Nach der Aktivierung wird das UV-Schutzfiltermaterial aufgebracht.

Es kann vorgesehen sein, daß die entsprechenden Etiketten 26 außerhalb der Indikatoren 22 mit Informationen wie beispielsweise Warendaten bedruckt werden. Dieses Bedrucken kann durch die Vorrichtung 72 selber (dort durch die zweite Druckeinrichtung 90) oder außerhalb der Vorrichtung 72 erfolgen.

Es ist auch grundsätzlich möglich, daß, wenn ein geeignetes Transferband 76 vorliegt, durch die Druckeinrichtung 84 auch ein Bedrucken der Etiketten 26 außerhalb der Indikatoren 22 erfolgt.

Es ist auch möglich, daß durch die Vorrichtung 72 bereitgestellte Etiketten 26, welche mit aktivierten Indikatoren 22 versehen sind, einer Etikettiervorrichtung zugeführt werden, in welcher sie bedruckt werden.

## Patentansprüche

1. Aktivierungsvorrichtung für durch UV-Licht aktivierbare temperatursensitive und/oder zeitsensitive Indikatoren (22; 96) zur Warenkennzeichnung, umfassend eine UV-Lichtquelleneinrichtung (14),
dadurch **gekenntzeichnet,**
dass mindestens ein Fotosensor (32; 35) und/oder mindestens ein Überprüfungssensor (34) zur Prüfung der Aktivierung von Indikatoren (22, 96) vorgesehen ist, der zusammen mit einer Regelungseinrichtung (30) einen Regelkreis realisiert, über welchen die Bestrahlungszeit und/oder die Bestrahlungsstärke der UV-Lichtquelleneinrichtung (14) regelbar ist.

2. Aktivierungsvorrichtung nach Anspruch 1,
**dadurch gekennzeichnet,**
**dass** die UV-Lichtquelleneinrichtung (14) mindestens eine UV-Leuchtdiode (16) umfasst, wobei insbesondere eine Mehrzahl von UV-Leuchtdioden (16) in einer oder mehreren Reihen (18a; 18b; 18c) angeordnet sind.

3. Aktivierungsvorrichtung nach Anspruch 1 oder 2,
**dadurch gekennzeichnet,**
**dass** durch die Regelungseinrichtung (30) die Lichterzeugung an der UV-Lichtquelleneinrichtung (14) und/oder die elektrische Beaufschlagung der UV-Lichtquelleneinrichtung (14) regelbar ist.

4. Aktivierungsvorrichtung nach einem der vorangehenden Ansprüche,
**dadurch gekennzeichnet,**
**dass** durch die Regelungseinrichtung (30) die Bestrahlungszeit zwischen 0,05 s und 20 s und/oder die Bestrahlungsstärke zwischen 25 mW/cm² und 400 mW/cm² einstellbar ist.

5. Aktivierungsvorrichtung nach einem der vorangehenden Ansprüche,
**dadurch gekennzeichnet,**
**dass** die UV-Lichtquelleneinrichtung (14) UV-Licht im Wellenlängenbereich zwischen 300 nm und 430 nm abstrahlt.

6. Aktivierungsvorrichtung nach einem der vorangehenden Ansprüche,
**dadurch gekennzeichnet,**
**dass** der mindestens eine Fotosensor (32; 35) der UV-Lichtquelleneinrichtung (14) und/oder einer Referenz-Lichtquelleneinrichtung (33) zugewandt angeordnet ist.

7. Aktivierungsvorrichtung nach einem der vorangehenden Ansprüche,
**dadurch gekennzeichnet,**
**dass** die UV-Lichtquelleneinrichtung (14) und der mindestens eine Fotosensor (32; 35) so angeordnet sind, dass zu aktivierende Indikatoren (22) zwischen ihnen durchführbar sind, und/oder dass der mindestens eine Fotosensor (35) und/oder eine Referenz-Lichtquelleneinrichtung (33) so angeordnet ist, dass der mindestens eine Fotosensor (35) auch beim Vorbeiführen von Indikatoren (22) an der UV-Lichtquelleneinrichtung (14) mit Strahlung beaufschlagbar ist.

8. Aktivierungsvorrichtung nach einem der vorangehenden Ansprüche,
**dadurch gekennzeichnet,**
**dass** der mindestens eine, vorzugsweise als Farbsensor ausgebildete Überprüfungssensor (34) zur Prüfung der Aktivierung von Indikatoren (22) vorgesehen ist, wobei insbesondere der mindestens eine Überprüfungssensor (34) zur Prüfung der korrekten Aktivierung von Indikatoren (22) insbesondere nach Abschluss der Aktivierung der UV-Lichtquelleneinrichtung (14) nachgeordnet ist.

9. Vorrichtung zur Bereitstellung von aktivierten temperatursensitiven und/oder zeitsensitiven Indikatoren (22) zur Warenkennzeichnung, umfassend eine Aktivierungsvorrichtung (12) gemäß einem der vorangehenden Ansprüche, wobei insbesondere der Aktivierungseinrichtung (12) eine Aufbringeinrichtung (62; 84) für einen UV-Schutzfilter nachgeordnet ist.

10. Vorrichtung nach Anspruch 9,
**dadurch gekennzeichnet,**
**dass** eine Aufnahme (36) für einen Vorrat an aktivierbaren Indikatoren (22) vorgesehen ist, die insbesondere zum Halten einer Rolle (38) ausgebildet ist.

11. Vorrichtung nach einem der Ansprüche 9 oder 10,
**gekennzeichnet durch**
eine Spendeeinrichtung (50) zum Spenden von Etiketten (26) und/oder durch eine Applikatoreinrichtung (55) zum Anbringen von Etiketten an Waren oder Warenverpackungen.

12. Verfahren zur Aktivierung eines durch UV-Licht aktivierbaren temperatursensitiven und/oder zeitsensitiven Indikators zur Warenkennzeichnung, bei dem der Indikator mit UV-Licht einer UV-Lichtquelleneinrichtung bestrahlt wird,
**dadurch gekennzeichnet,**
**dass** mindestens ein Fotosensor (32, 35) und / oder mindestens ein Überprüfungssensor (34) zur Prüfung der Aktivierung von Indikatoren (22, 96) vorgesehen ist, der zusammen mit einer Regelungseinrichtung (30) einen Regelkreis realisiert, über welchen die Bestrahlungszeit und/oder Bestrahlungsstärke zur Einstellung der Temperatursensitivität und/oder der Zeitsensitivität des Indikators geregelt wird.

13. Verfahren nach Anspruch 12,
**dadurch gekennzeichnet,**
**dass** der Indikator über mindestens eine UV-Leuchtdiode beleuchtet wird und/oder dass zur Regelung der Bestrahlungszeit und/oder Bestrahlungsstärke die elektrische Beaufschlagung der UV-Lichtquelleneinrichtung, insbesondere mindestens einer Leuchtdiode, geregelt wird.

14. Verfahren nach einem der Ansprüche 12 bis 13,
**dadurch gekennzeichnet,**
**dass** durch mindestens einen Fotosensor die Lichtemission der UV-Lichtquelleneinrichtung oder einer Referenz-Lichtquelleneinrichtung gemessen wird.

15. Verfahren nach einem der Ansprüche 12 bis 14,
**dadurch gekennzeichnet,**
**dass** die Bestrahlungszeit und/oder Bestrahlungsstärke so geregelt wird, insbesondere mittels mindestens eines Fotosensors, dass eine Alterung und/oder eine Verschmutzung der UV-Lichtquelleneinrichtung kompensiert wird, und/oder dass durch einen Überprüfungssensor eine Aktivierung des Indikators geprüft wird, wobei insbesondere die korrekte Aktivierung des Indikators nach Abschluss der Aktivierung geprüft wird.

## Claims

1. An activation device for temperature sensitive and/or time sensitive indicators (22; 96) activatable by UV light for product labeling, comprising a UV light source device (14),
**characterized in that**
at least one photo sensor (32; 35) and/or at least one checking sensor (34) for the checking of the activation of indicators (22, 96) is/are provided and, together with a regulation device (30), realizes/realize a feedback loop via which the radiation time and/or the radiation strength of the UV light source device (14) can be regulated.

2. An activation device in accordance with claim 1,
**characterized in that**
the UV light source device (14) comprises at least one UV light emitting diode (16), with in particular a plurality of UV light emitting diodes (16) being arranged in one or more rows (18a; 18b; 18c).

3. An activation device in accordance with claim 1 or claim 2,
**characterized in that**
the light generation at the UV light source device (14) and/or the electrical action on the UV light source device (14) can be regulated by the regulation device (30).

4. An activation device in accordance with any one of the preceding claims,
**characterized in that**
the radiation time can be adjusted between 0.05 s and 20 s and/or the radiation strength can be adjusted between 25 mW/cm² and 400 mW/cm² by the regulation device (30).

5. An activation device in accordance with any one of the preceding claims,
**characterized in that**
the UV light source device (14) radiates UV light in the wavelength range between 300 nm and 430 nm.

6. An activation device in accordance with any one of the preceding claims,
**characterized in that**
the at least one photo sensor (32; 35) is arranged facing the UV light source device (14) and/or a reference light source device (33).

7. An activation device in accordance with any one of the preceding claims,
**characterized in that**
the UV light source device (14) and the at least one photo sensor (32; 35) are arranged such that indicators (22) to be activated can be passed between them; and/or **in that** the at least one photo sensor (35) and/or a reference light source device (33) is/are arranged such that the at least one photo sensor (35) can also be acted on by radiation when indicators (22) are led past the UV light source device (14).

8. An activation device in accordance with any one of the preceding claims,
**characterized in that**
the at least one checking sensor (34), which is preferably configured as a color sensor, is provided for the checking of the activation of indicators (22), with in particular the at least one checking sensor (34) for the checking of the correct activation of indicators (22) being arranged after the UV light source device (14) in particular after the end of the activation.

9. A device for the provision of activated temperature sensitive and/or time sensitive indicators (22) for product labeling, comprising an activation device (12) in accordance with any one of the preceding claims, wherein in particular an application device (62; 84) for a UV protection filter is arranged after the activation device (12).

10. A device in accordance with claim 9,
**characterized in that**
a receiver (36) for a store of activatable indicators (22) is provided and is in particular configured to hold a roll (38).

11. A device in accordance with one of the claims 9 or 10,
**characterized by**
a dispensing device (50) for the dispensing of labels (26) and/or by an applicator device (55) for the application of labels to products or product packaging.

12. A method for the activation of a temperature sensitive and/or time sensitive indicator activatable by UV light for product labeling, in which the indicator is radiated with UV light of a UV light source device,
**characterized in that**
at least one photo sensor (32; 35) and/or at least one checking sensor (34) for the checking of the activation of indicators (22, 96) is/are provided and, together with a regulation device (30), realizes/realize a feedback loop via which the radiation time and/or the radiation strength is/are regulated for the adjustment of the temperature sensitivity and/or of the time sensitivity of the indicator.

13. A method in accordance with claim 12,
**characterized in that**
the indicator is illuminated via at least one UV light emitting diode; and/or **in that** the electrical action on the UV light source device, in particular at least one light emitting diode, is regulated for the regulation of the radiation time and/or radiation strength.

14. A method in accordance with one of the claims 12 to 13,
**characterized in that**
the light emission of the UV light source device or of a reference light source device is measured by at least one photo sensor.

15. A method in accordance with any one of the claims 12 to 14,
**characterized in that**
the radiation time and/or radiation strength is/are regulated, in particular by means of at least one photo sensor, such that an aging and/or a contamination of the UV light source device is compensated; and/or **in that** an activation of the indicator is checked by a checking sensor, with in particular the correct activation of the indicator being checked after the end of the activation.

## Revendications

1. Dispositif d'activation pour des indicateurs (22 ; 96) activables par la lumière UV et sensibles à la température et/ou au temps pour le marquage de marchandises, comportant un moyen formant source de lumière UV (14),
**caractérisé en ce que**
il est prévu au moins un capteur photosensible (32 ; 35) et/ou au moins un capteur de vérification (34) pour vérifier l'activation d'indicateurs (22, 96), qui, conjointement avec un moyen de régulation (30), réalise un circuit de régulation permettant de réguler la durée d'irradiation et/ou l'intensité d'irradiation du moyen formant source de lumière UV (14).

2. Dispositif d'activation selon la revendication 1,
**caractérisé en ce que**
le moyen formant source de lumière UV (14) comprend au moins une diode électroluminescente UV (16), et il est prévu en particulier une pluralité de diodes électroluminescentes UV (16) en une ou en plusieurs rangées (18a ; 18b ; 18c).

3. Dispositif d'activation selon la revendication 1 ou 2,
**caractérisé en ce que**
le moyen de régulation (30) permet de réguler la production de lumière au niveau du moyen formant source de lumière UV (14) et/ou la sollicitation électrique du moyen formant source de lumière UV (14).

4. Dispositif d'activation selon l'une des revendications précédentes,
**caractérisé en ce que**
le moyen de régulation (30) permet de régler la durée d'irradiation comprise entre 0,05 s et 20 s et/ou l'intensité d'irradiation comprise entre 25 mW/cm² et 400 mW/cm².

5. Dispositif d'activation selon l'une des revendications précédentes,
**caractérisé en ce que**
le moyen formant source de lumière UV (14) émet de la lumière UV dans la plage de longueur d'onde comprise entre 300 nm et 430 nm.

6. Dispositif d'activation selon l'une des revendications précédentes,
**caractérisé en ce que**
ledit au moins un capteur photosensible (32 ; 35) est tourné vers le moyen formant source de lumière UV (14) et/ou vers un moyen formant source de lumière de référence (33).

7. Dispositif d'activation selon l'une des revendications précédentes,
**caractérisé en ce que**
le moyen formant source de lumière UV (14) et ledit au moins un capteur photosensible (32 ; 35) sont agencés de manière à permettre aux indicateurs à activer (22) de passer entre ceux-ci, et/ou **en ce que** ledit au moins un capteur photosensible (35) et/ou un moyen formant source de lumière de référence (33) est agencé de manière à permettre de solliciter par un rayonnement ledit au moins un capteur photosensible (35) même lors du passage d'indicateurs (22) devant le moyen formant source de lumière UV (14).

8. Dispositif d'activation selon l'une des revendications précédentes,
**caractérisé en ce que**
ledit au moins un capteur de vérification (34) réalisé de préférence sous forme de capteur de couleur est prévu pour vérifier l'activation d'indicateurs (22), et, en particulier, en vue de vérifier l'activation correcte d'indicateurs (22) en particulier après terminaison de l'activation, ledit au moins un capteur de vérification (34) est agencé en aval du moyen formant source de lumière UV (14).

9. Dispositif de mise à disposition d'indicateurs (22) activés sensibles à la température et/ou au temps pour le marquage de marchandises, comportant un dispositif d'activation (12) selon l'une des revendications précédentes, dans lequel est prévu en particulier un moyen de fixation (62 ; 84) destiné à un filtre de protection UV et agencé en aval du dispositif d'activation (12).

10. Dispositif selon la revendication 9,
**caractérisé en ce que**
il est prévu un logement (36) pour une réserve d'indicateurs activables (22), qui est réalisé en particulier pour retenir un rouleau (38).

11. Dispositif selon l'une des revendications 9 ou 10,
**caractérisé par**
un moyen distributeur (50) pour distribuer des étiquettes (26) et/ou par un moyen applicateur (55) pour fixer des étiquettes sur des marchandises ou des emballages de marchandises.

12. Procédé d'activation d'un indicateur activable par la lumière UV et sensible à la température et/ou au temps pour le marquage de marchandises, dans lequel l'indicateur est irradié par une lumière UV d'un moyen formant source de lumière UV,
**caractérisé en ce que**
il est prévu au moins un capteur photosensible (32, 35) et/ou au moins un capteur de vérification (34) pour vérifier l'activation d'indicateurs (22, 96), qui, conjointement avec un moyen de régulation (30), réalise un circuit de régulation permettant de réguler la durée d'irradiation et/ou l'intensité d'irradiation pour régler la sensibilité à la température et/ou la sensibilité au temps de l'indicateur.

13. Procédé selon la revendication 12,
**caractérisé en ce que**
l'indicateur est illuminé par au moins une diode électroluminescente UV et/ou **en ce que** pour réguler la durée d'irradiation et/ou l'intensité d'irradiation, la sollicitation électrique du moyen formant source de lumière UV, en particulier d'au moins une diode électroluminescente est régulée.

14. Procédé selon l'une des revendications 12 à 13,
**caractérisé en ce que**
on mesure l'émission lumineuse du moyen formant source de lumière UV ou d'un moyen formant source de lumière de référence par au moins un capteur photosensible.

15. Procédé selon l'une des revendications 12 à 14,
**caractérisé en ce que**
la durée d'irradiation et/ou l'intensité d'irradiation est régulée en particulier à l'aide d'au moins un capteur photosensible de telle sorte qu'un vieillissement et/ou un encrassement du moyen formant source de lumière UV est compensé, et/ou qu'une activation de l'indicateur est vérifiée par un capteur de vérification en vérifiant en particulier l'activation correcte de l'indicateur après terminaison de l'activation.
